# EUROPÄISCHE PATENTSCHRIFT

(11) **EP 0 689 388 B1**
(45) Veröffentlichungstag und Bekanntmachung des Hinweises auf die Patenterteilung: **26.11.1997**
(21) Anmeldenummer: 94911937.4
(22) Anmeldetag: 21.03.1994
(51) Int. Cl.: A23K 1/16, A23K 1/18, A01K 61/02

(54) **LANGZEITFUTTER FÜR WASSERTIERE**
LONG-LIFE FEEDSTUFF FOR AQUATIC ANIMALS
NOURRITURE DE LONGUE DUREE POUR ANIMAUX AQUATIQUES

(30) Priorität: 22.03.1993 DE 4309104
(43) Veröffentlichungstag der Anmeldung: 03.01.1996
(73) Patentinhaber: Tetra Werke Dr.rer.nat. Ulrich Baensch GmbH, 49324 Melle (DE)
(72) Erfinder: KÜRZINGER, Hubert, D-49324 Melle (DE)
(74) Vertreter: Tesch, Rudolf, Dr.
(86) Internationale Anmeldenummer: EP9400879
(87) Internationale Veröffentlichungsnummer: WO9421139

(56) Entgegenhaltungen:
- WO-A-87/01587
- DE-A- 1 958 253
- DE-A- 2 063 814
- DE-A- 3 707 032
- DE-C- 959 246
- DE-U- 8 416 152
- PATENT ABSTRACTS OF JAPAN vol. 16, no. 362 (C-0971)5. August 1992 & JP,A,04 117 243 (DAI ICHI KOGYO SEIYAKU CO LTD) 17. April 1992
- PROGRESSIVE FISH-CULTURIST Bd. 43, Nr. 3 , 1981 Seiten 142 - 145 JOHN M. HEINEN 'Evaluation of some binding agents for crustacean diets'
- ABSTRACTS OF PAPERS OF THE ANNUAL MEETING, AMERICAN ASSOCIATION OF ZOO VETERINARIANS 1984 , LOUSVILLE, KENTUCKY, USA Seiten 50 - 51 DUDLEY D. CULLEY 'Prepared and cultivated feeds for animals in zoological gardens'
- PATENT ABSTRACTS OF JAPAN vol. 9, no. 317 (C-319)12. Dezember 1985 & JP,A,60 153 764 (KIYOSHI KUMABE) 13. August 1985

## Beschreibung

Die Erfindung betrifft ein in Süß- und Seewasser dauerstabiles Langzeitfutter für Wassertiere, insbesondere Fische, Shrimps und Invertebraten, einsetzbar auch als Wochenend-Ferienfutter für Zierfische.

Bekannt sind derartige langzeitstabile Futtermittel für Zierfische im Süßwasser, sogenannte Futterblöcke oder Futtersteine, die nur einen sehr geringen organischen Anteil haben und in der Hauptsache aus Calciumsulfat bestehen. Weiterhin bekannt ist aus der DE 37 07 032 ein Ferienfutter, was die Nachteile der Calciumsulfat-Futterblöcke zwar überkommt, indem zur Langzeitstabilisierung vor allem Zement und Rohkautschuk eingesetzt werden. Nachteilig daran ist wiederum, daß die zuletzt genannten notwendigen Zusatzstoffe für Wassertiere nahezu unverdaulich und in vielen Ländern futtermittelrechtlich nicht zugelassen sind.

Aus der DE 19 58 253 ist bekannt, herkömmliche Fischfuttergrundmischung in eine Gallerte eines Hydrokolloids wie Gelatine oder Agar Agar einzuarbeiten. Diese Gallerte oder Schaumgallerte kann direkt verfüttert oder aber zur längeren Lagerung getrocknet werden. Vergleichsversuche haben jedoch gezeigt, daß ein derartiges Futter eine offenporige Oberfläche besitzt und die an ein Ferienfutter zu stellenden Anforderungen nicht erfüllt, da es bereits nach wenigen Stunden im Wasser zerfällt.

Auch aus "Progressive Fish Culturist 43(3), 142, 1981, Heinen: Evaluation of Some Binding Agents for Crustacean Diets" ist ein der DE 19 58 253 ähnliches Futter beschrieben, das ebenfalls Hydrokolloide wie Agar Agar und Alginate als Bindemittel enthält und welches in Vergleichsversuchen die gleichen negativen Eigenschaften zeigte.

Aufgabe der Erfindung ist daher, ein industriell produzierbares, dauerstabiles Langzeitfutter für Wassertiere, insbesondere Fische, Shrimps und Invertebraten, einsetzbar in Süß- und Seewasser, bereitzustellen, das insbesondere für Warm- und Kaltwasser-Zierfische im Aquariumwasser während des Wochenendes und der Ferienzeiten die Zierfische für einen längeren Zeitraum ständig mit Nährstoffen versorgt, ohne dabei futtermittelrechtlich nicht überall zulässige Hilfsstoffe zu verwenden, gleichzeitig aber auch nicht die Qualität des Aquariumwassers durch andere Hilfsstoffe zu beeinträchtigen.

Überraschenderweise wurde nun gefunden, daß durch die Verwendung von Pflanzengummis, bevorzugt Agar-Agar, der Einsatz von Zement, Calciumsulfat und/oder Latex vermieden werden kann und diese Futterzubereitungen sogar noch gegenüber den in der DE 37 07 032 beschriebenen Futtermittel wesentlich verbesserte zusätzliche Eigenschaften besitzen.

Gegenstand der Erfindung ist daher ein langzeitstabiles, unlösliches, quellbares und den Wasserchemismus nicht belastendes extrudiertes Langzeitfutter für Wassertiere, insbesondere Fische, Shrimps und Invertebraten im Süß- und Seewasser, einsetzbar auch als Wochenend- und Ferienfutter für Warm- und Kaltwasser-Zierfische im Süß- und Seewasser welches eine glatte Oberfläche besitzt, eine Restfeuchte von 1 - 20% hat und 1 - 50% Agar Agar enthält. Bevorzugt ist ein Zierfischfutter, welches 1 - 10% Agar Agar enthält, besonders bevorzugt 2,9% bei einem Restfeuchte von 3%. Pflanzengummis sind beispielsweise Carrageenan, Agar Agar, Gummi arabicum, Tragant, Karaya-Gummi, Ghatti-Gummi, Johannisbrotkernmehl, Tara-Gummi oder Xanthane. Ganz besonders bevorzugt ist Agar Agar.

Das neuartige Langzeitfutter für Zierfische ist charakterisiert durch den Wegfall von Naturkautschuk und Zement, den Einsatz futtermittelrechtlich konformer Zusatzstoffe, die Herstellung mittels optimierter Extrusionsparameter, erhöhte Produktionsleistung, verbesserte optische und physikalische Eigenschaften, erhöhte Wasserbeständigkeit und reduzierte Wasserbelastung.

Zusätzlich bewirkt eine Reduktion des Feuchtegehaltes im erfindungsgemäßen Futter weitere positiven Eigenschaften bezüglich Wasserbeständigkeit und vor allem bezüglich Bindewirkung. Die Rohstoffe sind zusätzlich für Fische hoch verdaulich.

Die Rezeptur des Langzeitfutters ist aus vielen verschiedenen Rohstoffen zusammengesetzt. Günstig für die Wasserstabilität der Sticks sowie den dauerhaften Zusammenhalt der Partikel sind Pflanzengummis, bevorzugt Agar Agar, ein aus Meeresalgen hergestelltes, zur Gruppe der Hydrokolloide gehörendes Geliermittel. Agar Agar ist eine getrocknete, hydrophile Kolloid-Substanz aus Riesenmolekülen, die einen linearen, fadenförmigen Aufbau haben und vor allem aus Galaktose bestehen. Für die Herstellung werden einige Arten der Rotalgen verwendet und zwar Gelidium und Gracellaria. Das Hydrokolloid ist nicht löslich in kaltem Wasser, ist aber bei höheren Temperaturen praktisch voll löslich. Der Schmelzpunkt liegt bei ca. 95 - 98°C, der Gelierpunkt bei ca. 35 - 40°C unter Ausbildung eines starken, klaren, thermoreversiblen Gels, welches erst bei Temperaturen über 85°C wieder schmilzt.

Das erfindungsgemäße Langzeitfutter wird zweckmäßigerweise mittels eines Kochextruders hergestellt aus den üblichen Futtervormischungen und dem Pflanzengummi sowie gegebenenfalls üblichen Vitaminen, Mineral-, Farb-, Aroma-, Lock- und Konservierungsstoffen.

Bevorzugt wird eine Futtervormischung aus 15 - 35% Bolus alba, 15 - 35% Weizenkleber, 5 - 25% Luzernegrünmehl, 5 - 20% Casein, 5 - 20% Krill, 1 - 10% Sojaöl, 1 - 10% Milcheiweiß, 1 - 10% Agar Agar sowie gegebenenfalls Vitamin- und Mineralstoffvormischungen, übliche Farbstoffe und/oder Aroma- bzw. Lockstoffe und Konservierungsmittel mit Hilfe eines Doppelschnecken-Kochextruders bei einer Extrudierschneckendrehzahl von 50 - 300 Umdrehungen/Minute und einer Temperatur im Mehleinzugsbereich von 40 - 160°C und im Düsenkopf von 40 - 180°C unter Zugabe von 10 - 50 l Wasser und/oder 1 - 30 kg Dampf pro Stunde bei einer Durchsatzleistung von 80 - 1500 kg/h zu 5 - 50 mm langen Extrudaten mit einem Stickdurchmesser von 2 - 20 mm produziert wird. Ganz besonders bevorzugt wird eine Mischung aus 22,2% Bolus alba, 22,0% Weizenkleber, 14,5% Luzernegrünmehl, 12,1% Casein, 9,7% Krill, 4,8 % Sojaöl, 4,0 % Milchprotein und 2,9% Agar Agar verwendet, die gegebenenfalls mit Vitamin- und Mineralstoffvormischungen, üblichen Farbstoffen und/oder Aroma- bzw. Lockstoffen und/oder Konservierungsmitteln bei einer Extrudierschneckendrehzahl von 100 Umdrehungen/Minute und einer Temperatur im Mehleinzugsbereich von 80°C und im Düsenkopf von 85°C unter Zugabe von 31 l Wasser pro Stunde zu 20 - 25 mm langen Extrudaten mit einem Stickdurchmesser von 6 - 8 mm extrudiert wird.

Die analytische Zusammensetzung der erfindungsgemäßen Langzeitfuttters ist 20 - 60% Rohprotein, 2 - 20% Rohfett, 20 - 40% Rohasche und 10 - 30% HCl-unlösliche Asche bei einem Feuchtigkeitsgehalt von 1 - 20%. In der bevorzugten Form enthält das Futter 38% Protein, 6% Rohfett, 32% Rohasche und 17% HCl-unlösliche Asche bei einer Restfeuchte von 3%.

Als Konservierungsmittel finden üblicherweise Ethoxyquin, Calciumpropionat oder Zitronensäure Verwendung.

Durch erfindungsgemäße Rezeptur und Extrusionsparameter erhöht sich die Ausbringleistung des Kochextruders von ca. 90 kg bei bekanntem Ferienfutter auf ca. 140 kg pro Stunde. Die erhaltenen Futtersticks sind gegenüber bekanntem Ferienfutter gleichmäßig geformt, zeigen eine glatte Oberfläche und gute Schnittflächen, d. h. das optische Aussehen ist deutlich verbessert, und sie sind sehr gut wasserbeständig und zeigen im Gegensatz zu bekanntem Ferienfutter auch nach längerer Verweilzeit unter Wasser keine Schimmelbildung auf der Futteroberfläche. Beim Einbringen in das Wasser wird das Futter sofort weich und quillt auf etwa doppelte Größe auf, behält aber im übrigen seine geometrische Form und zerfällt nicht. Das aus der DE 37 07 032 bekannte Futter ist dagegen in seiner geometrischen Form nicht stabil sondern zerfällt nach Einbringen in das Hälterungswasser relativ rasch in kleine Einzelpartikel, woraus dann, wie unten ausgeführt, eine höhere Wasserbelastung resultiert.

Bei der Verfütterung der erfindungsgemäßen Sticks ist im Vergleich zu bekannten Rezepturen die Wasserbelastung im Aquarium deutlich niedriger. Es sind keine erhöhten Ammonium-Werte meßbar und die Nitrit-Gehalte sind stark reduziert. Bei einem durchschnittlichen Fischbesatz von 18 Fischen in einem 30 l fassenden Aquarium sind nach üblichen Fütterungsversuchen 1 - 2 der erfindungsgemäßen Futtersticks für ca. eine Woche als Futter ausreichend. Bei einem biologisch einwandfrei arbeitenden aktiven Filtersystem mit Schaumstoffpatronen wurden bei diesen Fütterungsversuchen nur 0,2 mg/l Nitrit und 0,05 mg/l Ammoniak als maximale Schadstoffkonzentrationen erreicht. Im Vergleich dazu führt Ferienfutter gemäß DE 37 07 032 zu Schadstoffkonzentrationen von 0,5 mg/l Nitrit und 0,2 mg/l Ammoniak.

Die erfindungsgemäßen Futterstücke sind relativ groß in bezug auf die relativ kleinen Zierfische. Das angebotene Futter kann daher nicht als ganzes gefressen werden, vielmehr beißt der Fisch je nach Bedarf kleine Stücke davon ab. Dadurch ist eine Bevorratung mit Futter mehrere Tage im Aquarium möglich. Wegen dieser besonderen Art der partiellen Futteraufnahme muß das Futter im Wasser sofort weich werden und aufquellen, darf aber nicht zerfallen. Eine bevorzugte Applikation des Futters erfolgt in einem durchlöcherten Folienbeutel, der mittels Haftsauger in unterschiedlichen Höhen an einer Innenseite von Aquarien befestigt werden kann. Warm- und Kaltwasser-Zierfische aus dem Süß- und Seewasser können somit über einen Zeitraum von bis zu 10 Tagen je nach Bedarf gezielt Futter durch die Perforierung aufnehmen. Gleichzeitig dient das Futter zur Bevorratung als Langzeitfutter und der Folienbeutel als Vorratsbehälter. In einem Folienbeutel können ein bis mindestens sechs Futtersticks plaziert werden. Diese Art der Futteraplikation wird von den verschiedenen Fischspezies hervorragend akzeptiert.

## Patentansprüche

1. Langzeitstabiles, unlösliches, quellbares und den Wasserchemismus nicht belastendes extrudiertes Langzeitfutter für Wassertiere, insbesondere Fische, Shrimps und Invertebraten im Süß- und Seewasser, einsetzbar auch als Wochenend- und Ferienfutter für Warm- und Kaltwasser-Zierfische, dadurch gekennzeichnet, daß es eine glatte Oberfläche besitzt, eine Restfeuchte von 1 - 20% hat und 1 - 50% Agar Agar enthält.

2. Futter gemäß Anspruch 1, dadurch gekennzeichnet, daß es 1 - 10% Agar Agar enthält.

3. Futter gemäß der Ansprüche 1 und 2, dadurch gekennzeichnet, daß es 2,9 % Agar Agar enthält bei einem Feuchtigkeitsgehalt von 3 %.

4. Verfahren zur Herstellung von Fischfutter gemäß der Ansprüche 1 bis 3, dadurch gekennzeichnet, daß eine Mischung aus 15 - 35% Bolus alba, 15 - 35% Weizenkleber, 5 - 25% Luzernegrünmehl, 5 - 20% Casein, 5 - 20% Krill, 1 - 10% Sojaöl, 1 - 10% Milcheiweiß, 1 - 10% Agar Agar und Vitamin- und Mineralstoffvormischungen, übliche Farbstoffe und/oder Aroma- bzw. Lockstoffe und Konservierungsmittel mit Hilfe eines Doppelschnecken-Kochextruders bei einer Extrudierschneckendrehzahl von 50 - 300 Umdrehungen/Minute und einer Temperatur im Mehleinzugsbereich von 40 - 160°C und im Düsenkopf von 40 - 180°C unter Zugabe von 10 - 50 l Wasser und/oder 1 - 30 kg Dampf pro Stunde bei einer Durchsatzleistung von 80 - 1500 kg/h zu 5 - 50 mm langen Extrudaten mit glatter Oberfläche, einem Stickdurchmesser von 2 - 20 mm und einem Restfeuchtegehalt von 1 - 20 % extrudiert wird.

5. Verfahren zur Herstellung von Fischfutter gemäß Anspruch 7, dadurch gekennzeichnet, daß eine Mischung aus 22,2% Bolus alba, 22,0% Weizenkleber, 14,5% Luzernegrünmehl, 12,1% Casein, 9,7% Krill, 4,8% Sojaöl, 4,0% Milchprotein, 2,9% Agar Agar und Vitamin- und Mineralstoffvormischungen, übliche Farbstoffe und/oder Aroma- bzw. Lockstoffe und/oder Konservierungsmittel mit Hilfe eines Doppelschnecken-Kochextruders bei einer Extrudierschneckendrehzahl von 100 Umdrehungen/Minute und einer Temperatur im Mehleinzugsbereich von 80°C und im Düsenkopf von 85°C unter Zugabe von 31 l Wasser pro Stunde zu 20 - 25 mm langen Extrudaten mit einem Stickdurchmesser von 6 - 8 mm und einem Feuchtigkeitsgehalt von 3 % extrudiert wird.

6. Verwendung des Futters gemäß der Ansprüche 1 bis 5 als im Wasser langzeitstabiles Wochenend- und Ferienfutter für Kalt- und Warmwasser-Zierfische im Süß- und Seewasser.

## Claims

1. A feed for aquatic animals, especially for fish, shrimps and invertebrates, which feed is stable for a long time, is insoluble, swellable and does not load the water chemistry in fresh and sea water and can also be used as a weekend or holiday feed for warm and cold water ornamental fish, characterized in that it has a smooth surface and contains 1 - 50% by weight of agar-agar by a moisture content of 1 - 20% by weight.

2. Feed according to claim 1, charcterized in that it contains 1 - 10% by weight of agar-agar.

3. Feed according to claim 1 or 2, it contains 2.9% by weight of agar-agar by a moisture content of 3% by weight.

4. Process for the production of a fish feed according to claims 1 to 3, wherein a mixture of 15 to 35% by weight of bolus alba, 15 to 35% by weight wheat gum, 5 to 25% by weight lucerne green flour, 5 to 20% by weight casein, 5 to 20% by weight krill, 1 to 10% by weight soya oil, 1 to 10% by weight milk protein, 1 to 10% by weight agar-agar and vitamin and mineral material pre-mixtures, conventional colouring materials and/or aroma and luring materials and preserving agents is extruded with the use of a twin-screw boiling extruder at an extruder screw speed of rotation of 50 to 300 r.p.m. and at a temperature in the meal introduction region of 40 to 160°C and in the nozzle head of 40 to 180°C with the addition of 10 to 50 litres of water and/or of 1 to 30 kg of steam per hour at a throughput capacity of 80 to 1500 kg/hour to give extrudates of 5 to 50 mm length, with a stick diameter of 2 to 20 mm and a moisture content of 1 - 20% by weight.

5. Process for the production of fish feed according to claim 7, wherein a mixture of 22.2% by weight bolus alba, 22.0% by weight wheat gum, 14.5% by weight lucerne green meal, 12.1% by weight casein, 9.7% by weight krill, 4.8% by weight soya oil, 4.0% by weight milk protein, 2.9% by weight agar-agar and vitamin and mineral material pre-mixtures, conventional colouring materials and/or aroma or luring materials and/or preserving agents is extruded with the help of a twin-screw boiling extruder at an extruder screw speed of rotation of 100 r.p.m. and at a temperature in the meal introduction region of 80°C and in the nozzle head of 85°C with the addition of 31 litres of water per hour to give extrudates of 20 to 24 mm length, with a stick diameter of 6 to 8 mm and a moisture content of 3% by weight.

6. The use of a feed according to any of claims 1 to 5 as weekend and holiday feed for cold and warm water fish in fresh and sea water which feed is stable for a long period of tine.

## Revendications

1. Aliment obtenu par extrusion, insoluble, gonflable, stable dans le temps et sans influence sur la chimie de l'eau, pour animaux aquatiques, en particulier poissons, crevettes et invertébrés d'eau douce et d'eau marine, utilisable également pour nourrir des poissons d'aquarium en eau froide ou chaude pendant le week-end ou les vacances, caractérisé en ce qu'il possède une surface lisse, une humidité résiduelle de 1 à 20 % et qu'il contient 1 à 50 % de agar-agar.

2. Aliment selon la revendication 1, caractérisé en ce qu'il contient 1 à 10 % de agar-agar.

3. Aliment selon l'une des revendications 1 et 2, caractérisé en ce qu'il contient 2,9 % de agar-agar avec une humidité de 3 %.

4. Procédé de fabrication d'aliment pour poissons selon les revendications 1 à 3, caractérisé en ce que un mélange est composé de 15 à 35 % de Bolus alba, 15 à 35 % de gluten de blé, 5 à 25 % de farine de luzerne verte, 5 à 20 % de caséine, 5 à 20 % de krill, 1 à 10 % d'huile de soja, 1 à 10 % de protéines de lait, 1 à 10 % de agar-agar et des mélanges préfabriqués de vitamines et de sels minéraux, des colorants habituels et/ou des arômes ou des liants et des conservateurs, à l'aide d'une extrudeuse à vis double travaillant selon un nombre de tours de la vis d'extrusion de 5 à 300 tours par minute et une température dans la zone d'amenée de la farine de 40 à 160°C et, dans la filière, de 40 à 180°C, en ajoutant 10 à 50 litres d'eau et/ou 1 à 30 kg de vapeur par heure avec un débit de 80 à 1500 kg/h en des extrudats longs de 5 à 50 cm à surface lisse avec un diamètre de jonc de 2 à 20 mm et une humidité résiduelle de 1 à 20 %.

5. Procédé de fabrication d'aliment pour poissons selon la revendication 4, caractérisé en ce qu'un mélange est composé de 22,2 % de Bolus alba, 22,0 % de gluten de blé, 14,5 % de farine de luzerne verte, 12,1 % de caséine, 9,7 % de krill, 4,8 % d'huile de soja, 4,0 % de protéines de lait, 2,9 % de agar-agar et des mélanges préfabriqués de vitamines et de sels minéraux, des colorants habituels et/ou des arômes ainsi que des liants et/ou des conservateurs, à l'aide d'une extrudeuse à double vis travaillant selon un nombre de tours de la vis d'extrusion de 100 tours par minute à une température dans la zone d'amenée de la farine de 80°C et dans la filière de 85°C, en ajoutant 31 litres d'eau par heure, en des extrudats d'une longueur de 20 à 25 mm avec un diamètre de jonc de 6 à 8 mm et une humidité de 3 %

6. Utilisation de l'aliment selon l'une quelconque des revendications 1 à 5, comme aliment stable dans le temps dans l'eau, approprié pour alimenter pendant les week-ends et les vacances les poissons d'aquarium en eau froide ou eau chaude et en eau douce ou marine.
